# FASCICULE DE BREVET EUROPEEN

(11) **EP 0 673 615 B1**
(45) Date de publication et mention de la délivrance du brevet: **02.05.1997**
(21) Numéro de dépôt: 95400491.7
(22) Date de dépôt: 07.03.1995
(51) Int. Cl.: A47J 27/04

(54) **Appareil de cuisson à la vapeur**
Dampf-Kochgerät
Steam cooking utensil

(30) Priorité: 11.03.1994 FR 9402863
(43) Date de publication de la demande: 27.09.1995
(73) Titulaire: COMPAGNIE EUROPEENNE POUR L'EQUIPEMENT MENAGER "CEPEM", F-45140 St Jean-de-la-Ruelle (FR)
(72) Inventeur: Chevrier, Jean-Paul, F-92402 Courbevoie Cédex (FR); Baratin, Nicole, F-92402 Courbevoie Cédex (FR); Delhomme, Bernard, F-92402 Courbevoie Cédex (FR)
(74) Mandataire: Benoit, Monique

(56) Documents cités:
- EP-A- 0 556 166
- DE-U- 9 215 233
- FR-A- 2 590 785
- US-A- 3 814 901
- US-A- 3 949 733
- US-A- 4 724 824

## Description

La présente invention concerne un appareil de cuisson à la vapeur, plus particulièrement un four vapeur.

Il existe actuellement sur le marché, des fours de cuisson à la vapeur utilisant deux types de générateurs de vapeur. Le premier type de fours de cuisson à la vapeur comporte une chaudière externe. Dans ce cas, l'eau est portée à ébullition dans la chaudière à l'extérieur de la cavité et la vapeur est conduite jusqu'à la cavité. Ceci présente un certain nombre d'inconvénients tels que la formation de tartre dans la chaudière entraînant une augmentation des temps de montée en ébullition et une obstruction des orifices de la chaudière. De ce fait, la chaudière doit être vidangée et nettoyée fréquemment. D'autre part, on réalise une cuisson uniquement en vapeur saturée, lorsqu'il n'y a pas d'autres sources de chaleur dans la cavité. Ceci ne convient pas à tous les types de cuisson.

L'autre type de four de cuisson à la vapeur comporte comme générateur de vapeur, une réserve d'eau prévue dans le fond de l'enceinte ou moufle du four. Dans ce cas, la totalité du volume d'eau est portée à ébullition et génère la vapeur à l'intérieur de l'enceinte de cuisson. Ce type de solution présente lui aussi des inconvénients, à savoir la production d'une vapeur de qualité médiocre due au bouillonnement important de l'eau dans le fond de la cavité du four. D'autre part, lorsque l'on arrête la cuisson avant évaporation complète de l'eau, l'eau restant dans le fond de la cavité doit être récupérée à l'aide, notamment, d'une éponge. De plus, en cas de cuisson prolongée après évaporation totale de l'eau, la cuisson n'est plus réalisée à la vapeur mais classiquement.

Par ailleurs, le document FR 2.590.785 décrit un appareil de cuisson à la vapeur comportant, dans son enceinte de cuisson, une cuve en aluminium dont les parois sont portées à température, et un dispositif d'amenée d'eau connecté à un réservoir d'eau extérieur à l'enceinte, et conçu pour pulvériser de l'eau par le fond de cette cuve. L'eau injectée rentrant en contact avec les parois chaudes de la cuve est, de ce fait transformée en vapeur. L'inconvénient d'un tel système est que le tartre vient obturer les trous de sortie de l'injecteur d'eau nébulisé, à moins de proscrire l'eau du robinet et/ou d'effectuer un traitement anti-tartre.

Le document US-A-3.949.733 décrit un appareil de cuisson à la vapeur comportant une enceinte de cuisson, une plaque placée à l'intérieur de l'enceinte et portée à température par des moyens de chauffage, et un dispositif d'amenée d'eau comportant un tube droit placé au moins partiellement dans l'enceinte de cuisson. Le tube comporte une pluralité de perforations pour le passage de l'eau depuis le tube sur la plaque. Pour éviter toute formation de tartre, le tube est isolé de l'enceinte de cuisson et les perforations sont placées dans un plan vertical, à mi-hauteur du tube, de façon à ce qu'une certaine quantité d'eau puisse être toujours présente dans le tube. De cette manière, le tube est gardé à une température pour laquelle il ne peut y avoir de formation de tartre.

La présente invention a pour but de proposer un nouvel appareil de cuisson à la vapeur qui ne présente pas les inconvénients mentionnés ci-dessus, sans pour autant avoir à empêcher la formation du tartre.

Plus précisément, la présente invention a pour objet un appareil de cuisson à la vapeur tel que défini dans les revendications 1 à 12.

Selon un mode de réalisation de la présente invention, la plaque peut être réalisée en un matériau poreux ou rugueux tel que la vitrocéramique traitée en surface pour la rendre rugueuse ou la pierre de lave. D'autre part, l'appareil de cuisson peut comporter des moyens de chauffage placés sous la plaque poreuse ou rugueuse, ces moyens pouvant comporter un foyer radiant ou un élément mica.

Selon une caractéristique supplémentaire de la présente invention, entre le tube et le réservoir est monté un dispositif de contrôle de la quantité d'eau envoyée dans l'enceinte de cuisson. Ce dispositif de contrôle est constitué par une pompe ou une électrovanne commandée. De préférence, le dispositif de contrôle de la quantité d'eau envoyée est associé à un dispositif de régulation.

Selon encore une autre caractéristique de la présente invention pour éviter les surpressions, l'enceinte de cuisson est munie d'une fuite calibrée.

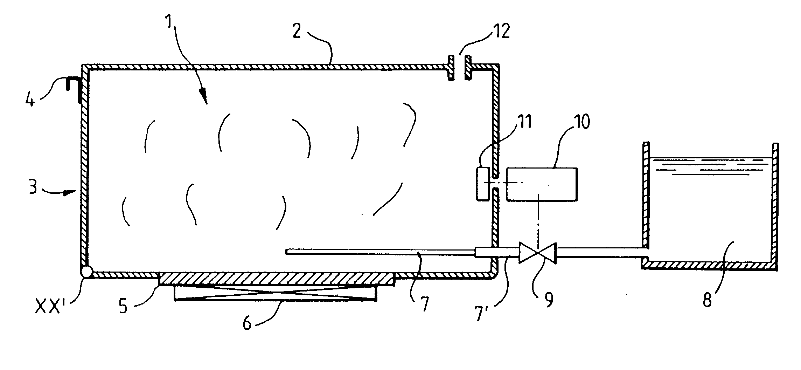

D'autres caractéristiques et avantages de la présente invention apparaîtront à la lecture de la description faite ci-après d'un mode de réalisation de la présente invention, cette description étant faite avec référence à la figure unique qui représente une vue schématique en coupe d'un four de cuisson à la vapeur conforme à la présente invention.

La présente invention sera décrite dans son application à un four de cuisson. Toutefois, il est évident pour l'homme de l'art qu'elle peut s'appliquer à d'autres types d'appareils de cuisson à la vapeur.

Sur l'unique figure annexée, le four 1 comporte, de manière classique, une enceinte 2 de cuisson ou moufle formant une cavité destinée à recevoir les mets à cuire. Cette enceinte 2 est fermée, sur sa partie avant, par une porte 3 munie d'une poignée 4 pour permettre à l'utilisateur d'ouvrir et de fermer la cavité. Dans l'exemple de réalisation représenté, la porte 3 peut pivoter autour d'un axe horizontal XX'. Toutefois, une porte à ouverture latérale peut être envisagée. Par ailleurs, pour pouvoir générer la vapeur nécessaire à la cuisson des aliments, le four est équipé d'un dispositif d'amenée d'eau pour amener de l'eau depuis l'extérieur de l'enceinte 2, jusque sur un élément 5 placé à l'intérieur de l'enceinte, et porté à température par des moyens de chauffage 6.

Selon l'invention, I'élément 5 est une simple plaque, placée de préférence sur la partie inférieure de l'enceinte de manière à optimiser le volume de l'enceinte de cuisson. Avantageusement, les moyens de chauffage 6, comportant par exemple un foyer radiant tel que les foyers utilisés dans les plaques de cuisson en vitrocéramique ou un élément mica, sont situés sous la plaque 5.

Selon un mode de réalisation avantageux de l'invention, l'élément 5 est une plaque poreuse ou rugueuse, de façon à ce que l'eau se répartisse lentement sur la plaque sans déborder dans l'enceinte de cuisson et qu'elle soit transformée en vapeur quasi-instantanément. La plaque peut être réalisée en pierre de lave, ou en vitrocéramique traitée en surface pour la rendre rugueuse.

Par ailleurs, selon l'invention, le dispositif d'amenée d'eau comporte un tube 7, placé au moins partiellement dans l'enceinte de cuisson, et débouchant au-dessus de la plaque 5. Avantageusement, le tube 7 possède une extrémité par laquelle passe l'eau, qui débouche sensiblement au-dessus du centre de la plaque de manière à optimiser la répartition de l'eau sur la plaque.

Dans un premier mode de réalisation possible selon l'invention, le tube 7 se prolonge à l'extérieur de l'enceinte de cuisson pour être connecté à un réservoir d'eau externe à l'enceinte.

Dans la variante de réalisation préférée représentée sur la figure, le tube 7 est maintenu, à l'intérieur de l'enceinte de cuisson, par une première extrémité d'un raccord 7' débouchant dans l'enceinte, l'autre extrémité du raccord 7' étant connectée au réservoir d'eau 8 externe à l'enceinte 2. Le tube 7 est par exemple enfiché ou vissé dans le raccord 7', de sorte qu'un utilisateur puisse facilement le démonter de l'intérieur de l'enceinte si nécessaire. Le tube 7 et le raccord 7' sont préférentiellement en inox.

L'utilisation combinée de la plaque, préférentiellement poreuse ou rugueuse, et du tube 7 permet un fonctionnement optimal de l'appareil de cuisson à la vapeur, sans qu'il soit nécessaire de proscrire l'eau du robinet ou de prévoir un traitement anti-tartre.

En effet, on sait que la formation du tartre est accrue lorsque la température dépasse un certain seuil, typiquement 60°C. Or, dans le cas présent, les seuls éléments susceptibles d'être exposés au tartre sont ceux qui sont situés dans l'enceinte de cuisson, à savoir le tube 7 (et éventuellement l'extrémité du raccord 7' si ce dernier est utilisé) et la plaque 5. Or, selon l'invention, la forme géométrique du tube 7 est optimisée pour favoriser l'évacuation du tartre par l'extrémité débouchante du tube. De manière préférentielle, le tube est droit et possède une section constante ou évasée, pour éviter toute accumulation de tartre dans le tube. On choisit avantageusement, pour le tube 7 et le raccord 7', une section d'au moins 4 mm de diamètre.

Ainsi, le tartre qui se forme est évacué sur la plaque 5, ce qui n'est en rien préjudiciable au fonctionnement de l'appareil car, le tartre étant poreux, il contribue à limiter la migration de l'eau et à permettre une transformation quasi-instantanée de l'eau en vapeur. La formation du tartre sur la plaque permet ainsi d'utiliser des matériaux non poreux pour réaliser la plaque 5.

Par ailleurs, comme représenté sur la figure, il est avantageux de monter entre l'enceinte 2 et le réservoir 8, un dispositif 9 de contrôle de la quantité d'eau envoyée qui, dans le mode de réalisation représenté, est constitué par une électrovanne commandée. On peut aussi envisager d'utiliser une pompe ou d'autres dispositifs permettant de contrôler la quantité d'eau. Cette électrovanne 9 est par exemple commandée par un dispositif de régulation 10, lui-même connecté à des capteurs de température 11 placés à l'intérieur de la cavité 2.

La régulation de la quantité de vapeur peut être améliorée en jouant sur d'autres éléments, notamment en optimisant la température de la plaque, en agissant par exemple sur la puissance de chauffe des moyens de chauffage 6.

En outre, l'enceinte 2 est munie de préférence d'une fuite calibrée 12 permettant de maintenir l'enceinte de cuisson à pression atmosphérique en évitant les surpressions à l'intérieur de l'enceinte.

Il est évident pour l'homme de l'art que l'on a décrit un mode spécifique de réalisation mais que ce mode de réalisation peut être facilement modifié sans sortir du cadre des revendications ci-jointes. Notamment les matériaux de réalisation de la plaque ainsi que les types de moyens de chauffage ou les types de dispositifs de contrôle ou de régulation n'ont été donnés qu'à titre d'exemple et peuvent être modifiés facilement.

## Revendications

1. Appareil de cuisson à la vapeur du type comportant une enceinte de cuisson (2), une plaque (5) placée à l'intérieur de l'enceinte et portée à température par des moyens de chauffage (6), et un dispositif d'amenée d'eau (7, 7') comportant un tube (7) droit placé au moins partiellement dans l'enceinte de cuisson pour amener de l'eau depuis l'extérieur de l'enceinte de cuisson sur ladite plaque, caractérisé en ce que le tube a une extrémité, par laquelle passe l'eau, débouchant au-dessus et sensiblement au centre de ladite plaque, et posséde une section supérieure à 4 mm de façon à favoriser l'évacuation du tartre depuis le tube sur ladite plaque.

2. Appareil cuisson selon la revendication 1, caractérisé en ce que le tube (7) est de section sensiblement constante.

3. Appareil de cuisson selon la revendication 1, caractérisé en ce que le tube (7) est évasé.

4. Appareil de cuisson selon l'une quelconque des revendications précédentes, caractérisé en ce que ledit tube (7) se prolonge à l'extérieur de l'enceinte de cuisson pour être connecté à un réservoir (8) d'eau externe.

5. Appareil de cuisson selon l'une quelconque des revendications 1 à 3, caractérisé en ce que ledit tube (7) est maintenu à l'intérieur de l'enceinte par une première extrémité d'un raccord (7') débouchant dans l'enceinte de cuisson, ledit raccord ayant une deuxième extrémité connectée à un réservoir (8) d'eau externe.

6. Appareil de cuisson selon l'une quelconque des revendications précédentes, caractérisé en ce que la plaque est en matériau poreux ou rugueux.

7. Appareil de cuisson selon la revendication 6, caractérisé en ce que la plaque est une vitrocéramique traitée en surface pour être rugueuse.

8. Appareil de cuisson selon la revendication 6, caractérisé en ce que la plaque est en pierre de lave.

9. Appareil de cuisson selon l'une quelconque des revendications précédentes, caractérisé en ce que les moyens de chauffage (6) sont placés sous la plaque.

10. Appareil de cuisson selon la revendication 9, caractérisé en ce que les moyens de chauffage comportent un foyer radiant ou un élément mica.

11. Appareil de cuisson selon l'une quelconque des revendications 4 ou 5, caractérisé en ce qu'il comporte un dispositif (9) de contrôle de la quantité d'eau envoyée, monté entre le tube (7) et le réservoir (8).

12. Appareil de cuisson selon l'une quelconque des revendications précédentes, caractérisé en ce qu'il comporte, dans l'enceinte de cuisson, une fuite calibrée (12) évitant les surpressions.

## Claims

1. Steam cooking utensil of the type including a cooking chamber (2), a plate (5) placed inside the chamber and brought up to temperature by heating means (6), and a water conveying device (7, 7') including a straight tube (7) placed at least partially inside the cooking chamber in order to convey water from outside the cooking chamber onto the said plate, characterized in that the tube has one end via which the water passes, emerging above and substantially in the centre of the said plate, and has a section larger than 4 mm so as to favour the discharge of scale from the tube onto the said plate.

2. Cooking utensil according to Claim 1, characterized in that the tube (7) is of substantially constant section.

3. Cooking utensil according to Claim 1, characterized in that the tube (7) is flared.

4. Cooking utensil according to any one of the preceding claims, characterized in that the said tube (7) is extended on the outside of the cooking chamber so as to be connected to an external water tank (8).

5. Cooking utensil according to any one of Claims 1 to 3, characterized in that the said tube (7) is held inside the chamber by a first end of a connector (7') emerging in the cooking chamber, the said connector having a second end connected to an external water tank (8).

6. Cooking utensil according to any one of the preceding claims, characterized in that the plate is made of a porous or rough material.

7. Cooking utensil according to Claim 6, characterized in that the plate is a vitreous ceramic with a surface-treatment to make it rough.

8. Cooking utensil according to Claim 6, characterized in that the plate is made of lava stone.

9. Cooking utensil according to any one of the preceding claims, characterized in that the heating means (6) are placed under the plate.

10. Cooking utensil according to Claim 9, characterized in that the heating means include a radiant source or a mica element.

11. Cooking utensil according to either one of Claims 4 and 5, characterized in that it includes a device (6) for controlling the amount of water sent, the device being mounted between the tube (7) and the tank (8).

12. Cooking utensil according to any one of the preceding claims, characterized in that it includes, within the cooking chamber, a calibrated leakage (12) preventing overpressure.

## Patentansprüche

1. Dampfkochgerät des Typs, der ein Kochgefäß (2), eine im Inneren des Gefäßes angeordnete und durch Heizmittel (6) auf Temperatur gebrachte Platte (5) sowie eine Vorrichtung (7, 7') zum Zuführen von Wasser enthält, die ein gerades Rohr (7) aufweist, das wenigstens teilweise im Inneren des Kochgefäßes angeordnet ist, um auf die Platte Wasser von außerhalb des Kochgefäßes aufzubringen, dadurch gekennzeichnet, daß das Rohr ein Ende, durch welches das Wasser läuft und das oberhalb und im wesentlichen in der Mitte der Platte mündet, sowie einen Querschnitt von mehr als 4 mm aufweist, um das Abführen von Kesselstein aus dem Rohr auf die Platte zu erleichtern.

2. Kochgerät nach Anspruch 1, dadurch gekennzeichnet, daß das Rohr (7) einen im wesentlichen konstanten Querschnitt hat.

3. Kochgerät nach Anspruch 1, dadurch gekennzeichnet, daß das Rohr (7) konisch erweitert ist.

4. Kochgerät nach einem der vorhergehenden Ansprüche, dadurch gekennzeichnet, daß sich das Rohr (7) außerhalb des Kochgefäßes fortsetzt, um mit einem externen Wasser-Vorratsbehälter (8) verbunden zu werden.

5. Kochgerät nach einem der Ansprüche 1 bis 3, dadurch gekennzeichnet, daß das Rohr (7) im Inneren des Gefäßes durch ein erstes Ende eines Anschlusses (7') gehalten ist, der in das Kochgefäß mündet, wobei ein zweites Ende des Anschlusses mit einem externen Wasser-Vorratsbehälter (8) verbunden ist.

6. Kochgerät nach einem der vorhergehenden Ansprüche, dadurch gekennzeichnet, daß die Platte aus einem porösen oder rauhen Material besteht.

7. Kochgerät nach Anspruch 6, dadurch gekennzeichnet, daß die Platte aus Glaskeramik ist, deren Oberfläche behandelt wurde, so daß sie rauh ist.

8. Kochgerät nach Anspruch 6, dadurch gekennzeichnet, daß die Platte aus Lavastein besteht.

9. Kochgerät nach einem der vorhergehenden Ansprüche, dadurch gekennzeichnet, daß die Heizmittel (6) unter der Platte angeordnet sind.

10. Kochgerät nach Anspruch 9, dadurch gekennzeichnet, daß die Heizmittel ein Strahlungselement oder ein Mica-Element enthalten.

11. Kochgerät nach einem der Ansprüche 4 und 5, dadurch gekennzeichnet, daß es eine Vorrichtung (9) zum Kontrollieren der Menge des zugeführten Wassers aufweist, die zwischen dem Rohr (7) und dem Vorratsbehälter (8) angeordnet ist.

12. Kochgerät nach einem der vorhergehenden Ansprüche, dadurch gekennzeichnet, daß es in dem Kochgefäß eine kalibrierte Öffnung (12) aufweist, die Überdrücke verhindert.
